# EUROPÄISCHE PATENTSCHRIFT

(11) **EP 3 490 817 B1**
(45) Veröffentlichungstag und Bekanntmachung des Hinweises auf die Patenterteilung: **29.04.2020**
(21) Anmeldenummer: 17727179.8
(22) Anmeldetag: 29.05.2017
(51) Int. Cl.: B60C 11/13, B60C 11/03

(54) **FAHRZEUGREIFEN**
VEHICLE TYRE
PNEUMATIQUE DE VÉHICULE

(30) Priorität: 26.07.2016 DE 102016213702
(43) Veröffentlichungstag der Anmeldung: 05.06.2019
(73) Patentinhaber: Continental Reifen Deutschland GmbH, 30165 Hannover (DE)
(72) Erfinder: HERBST, Stephan, 30855 Langenhagen (DE); RITTWEGER, Stefan, 30826 Garbsen (DE)
(74) Vertreter: Finger, Karsten
(86) Internationale Anmeldenummer: PCT/EP2017/062820
(87) Internationale Veröffentlichungsnummer: WO 2018/019449

(56) Entgegenhaltungen:
- EP-A1- 0 413 502
- EP-A1- 1 810 849
- EP-A1- 2 406 088
- EP-B1- 2 655 094

## Beschreibung

Die Erfindung betrifft einen Fahrzeugreifen mit einem Off-Road-Laufstreifenprofil mit radial erhabenen Profilelementen, die durch über den Umfang des Fahrzeugreifens erstreckte Umfangsrillen getrennt sind und mit quer verlaufende Rillen, welche in Umfangsrillen münden, wobei die Umfangsrillen in radialer Richtung nach innen hin durch einen Rillengrund und beiderseits des Rillengrundes jeweils durch eine Rillenwand begrenzt werden und längs ihrer Erstreckung über den Umfang des Reifens mit geänderter axialer Neigung ausgebildet sind.

Derartige Fahrzeugluftreifen sind bekannt.

Fahrzeugluftreifen mit Off-Road-Laufstreifenprofilen sind üblicher Weise mit stollenförmigen, radial erhabenen Profilelementen, welche durch Umfangsrillen und Querrillen voneinander getrennt sind, ausgebildet. Teilweise weisen derartige Profile auch über den Umfang des Reifens erstreckte rippenförmige Profilelemente auf, die durch Umfangsrillen voneinander getrennt sind, wobei in den derartig erstreckten Profilelementen zusätzliche querverlaufende Rillen ausgebildet sind, die in eine der beiden Umfangsrillen münden und mit ihrem anderen von dieser Umfangsrille wegweisenden Erstreckungsende innerhalb des rippenförmigen Profilelementes enden. Die Umfangsrillen derartiger Profile sind in ihrem Erstreckungsverlauf in Umfangsrichtung zur Erzielung guter Offroad-Eigenschaften mit in kurzen Umfangs-Intervallen und unterschiedlich stark veränderter axialer Neigung ausgebildet. Aufgrund des Einsatzes im Off-Road-Bereich ist die Gefahr des Eindringens von Steinen in die Umfangsrillen, in deren Rillengrund und bei Eindringen in den Rillengrund auch bis in den Gürtelbereich besonders hoch. Daher ist es bei diesen Laufstreifenprofilen besonders wünschenswert, einen Schutz vor Eindringen von Steinen in den Rillengrund bereitzustellen. Dabei ist bei Off-Road-Reifen aufgrund des wechselnden Verlaufes der Umfangsrillen mit axialer Neigung mal zur einen, mal zur anderen axialen Richtung der Durchfluss von Wasser durch die Umfangsrille und somit die Durchströmung und der Ablauf des Wassers aus dem Profil bereits eingeschränkt. Im Bereich der Einmündungen der Querrillen in die Umfangsrillen, in denen das Negativvolumen des Profils besonders hoch ist, ist die Gefahr des Eindringens von Steinen besonders groß. Aufgrund des stark veränderten Richtungsverlaufs der Umfangsrille zwischen den Einmündungspositionen von hintereinander einmündenden Querrillen ist jedoch in dem Erstreckungsbereich zwischen den Einmündungen bei Off-Road-Profilen die Gefahr des Eindringens von Steinen relativ klein.

Übliche bekannte Maßnahmen zur Vermeidung des Eindringens von Steinen in Umfangrillen erstrecken sich über die gesamte Umfangsrille eines Reifen-Profils hinweg und beeinflussen mehr oder weniger stark den Durchfluss und somit den Abfluss von Wasser aus den Umfangsrillen und beeinträchtigen somit beispielsweise das Aquaplaningverhalten. Derartige bekannte Ausbildungen von Umfangsrillen mit im Rillengrund ausgebildeten Steinauswerfern erschweren somit den gerade bei Off-Road-Reifen zwischen den Positionen von Einmündungen ohnehin bereits eingeschränkten Wasserablauf zusätzlich. Um zufriedenstellenden Wasserabfluss sicher ermöglichen, müssten die Rillen bei den bekannten Ausbildungen besonders breit ausgebildet werden, was bei Nutzfahrzeugreifen oder auch bei manchen normalen Pkw-Reifen, die für den Straßeneinsatz gedacht sind, in begrenztem Umfang möglich ist. Hierdurch lässt sich der Einfluss auf die Strömung begrenzen und dennoch ein guter Schutz gegen Eindringen von Steinen umsetzen.

Bei Off-Road-Reifen ist eine derartige Ausbildung mit breiten, geradlinig erstreckten Umfangsrillen jedoch nur begrenzt möglich. Somit ist gerade bei diesen Reifen die Ausbildung der üblichen über den Umfang von Umfangsrippen hinweg dicht aneinander gereihten Anordnungen von Steinauswerfern nur unter deutlichen zusätzlichen Einschränkungen des Durchflusses einfach umsetzbar.

Aus der EP 1 810 849 A1 ist es bekannt, bei einem Nutzfahrzeugreifen mit herkömmlichen Blockreihenprofilen und geradlinig über den Umfang erstreckten Umfangsrillen und geradlinig erstreckten axial verlaufenden Querrillen im Rillengrund der geradlinig erstreckten Umfangs- und Querrillen jeweils dicht hintereinander angeordnet radial erhabene Steinauswerfer auszubilden, welche aus einem zylindrischen zentralen Körper und aus mehreren strahlenförmig vom zylindrischen Körper wegweisend erstreckten Rampen ausgebildet sind. Die Rampen sind jeweils nahezu so breit ausgebildet, wie der Durchmesser des zentralen Körpers. Im Bereich von Einmündungen von Querrillen ist jeweils dem zentralen Körper vor- und nachgeordnet eine Rampe ausgebildet, die sich in Erstreckungsrichtung der geradlinig erstreckten Umfangrichtung erstrecken und zusätzlich sind weitere Rampen ausgebildet, welche sich in Erstreckungsrichtung der Querrillen erstrecken. Eine derartige Ausbildung von Steinabweisern ist bei Nutzfahrzeugreifen mit geradlinig erstreckten Umfangs- und Querrillen, wobei die Umfangsrillen sehr breit ausgebildet sind, möglich und bieten dort Schutz gegen Eindringen von Steinen. Die Ausbildung derartiger Steinabweiser mit Rampen, die nahezu so breit sind wie der Durchmesser der zentralen Körper, bei denen sowohl in Umfangs- als auch in Querrillen dicht an dicht diese breit ausgbildeten Strömungshindernisse bildende Steinabweiser angeordnet sind und bei denen im Bereich der Einmündung zusätzlich quer zur Umfangsrille ausgebildete Rampen, die die Strömung durch die Umfangsrille zusätzlich stark behindern, stellt somit im unteren Bereich der Rille ein deutliches Hindernis für gute Durchströmung dar. Bei den in der EP 1 810 849 A1 ausgebildeten Nutzfahrzeugreifen mit geradlinig erstreckten, breiten Umfangsrillen und geradlinig erstreckten Querrillen ist der Negativeinfluss auf die Durchströmung begrenzt.

Ein Einsatz einer derartigen Ausbildung bei Off-Road-Reifen mit den dort üblichen starken Veränderungen des Neigungsverlaufs der Umfangsrillen mit schmalen Umfangsrillen und auch mit üblicher Weise in ihrem Erstreckungsverlauf veränderten Querrillen, bei denen ohnehin bereits zwischen den Positionen der Einmündungen der Querrillen in die Umfangsrille, die Strömung durch den Verlauf der Umfangsrille beeinträchtigt ist, würde den Durchfluss des Wassers erheblich weiter beeinträchtigen und die Aquaplaning-Tauglichkeit des Reifens verschlechtern.

**Aus der** EP 0 413 502 A1 **ist ein Fahrzeugreifen** mit stegförmigen Steinabweisern bekannt. Außerdem ist aus der EP 2 655 094 B1 ein Fahrzeugreifen **gemäß den Merkmalen des Oberbegriffs des Anspruchs 1 bekannt.**

Der Erfindung liegt daher die Aufgabe zugrunde, bei derartigen Fahrzeugreifen mit einem Off-Road-Laufstreifenprofil in einfacher Weise eine verbesserten Schutz gegen das Eindringen von Steinen zu ermöglichen ohne den Wasserdurchfluss merklich zu beeinträchtigen.

Die Aufgabe wird erfindungsgemäß durch die Ausbildung eines Fahrzeugreifens mit einem Off-Road-Laufstreifenprofil mit radial erhabenen Profilelementen, die durch über den Umfang des Fahrzeugreifens erstreckte Umfangsrillen getrennt sind und mit quer verlaufende Rillen, welche in Umfangsrillen münden, wobei die Umfangsrillen in radialer Richtung nach innen hin durch einen Rillengrund und beiderseits des Rillengrundes jeweils durch eine Rillenwand begrenzt werden und längs ihrer Erstreckung über den Umfang des Reifens mit geänderter axialer Neigung ausgebildet sind, gemäß den Merkmalen von Anspruch 1 gelöst, bei dem im Rillengrund von wenigstens einer Umfangsrille radial erhabene Steinabweiser kontaktfrei zu den Rillenwänden ausgebildet sind, welche jeweils aus einem zylindrischen oder kegelstumpfförmigen zentralen Körper mit maximalem Durchmesser D, dessen Zylinder- bzw. Kegelachse im Wesentlichen in radialer Richtung ausgerichtet ist, und aus jeweils einem in Erstreckungsrichtung der Umfangsrille dem zentralen Körper vorgeordneten und einem in Erstreckungsrichtung der Umfangsrille dem zentralen Körper nachgeordneten stegförmigen Körper ausgebildet ist, wobei die beiden stegförmigen Körper jeweils ausgehend von der Mantelfläche des zentralen Körpers parallel zur Erstreckungsrichtung der Umfangsille ausgerichtet vom zentralen Körper strahlenförmig wegweisend erstreckt und mit einer maximalen Breite b mit (0,5 D) ≥ b ≥ 1mm ausgebildet sind, und bei dem zentrale Körper jeweils ausschließlich in Umfangserstreckungsbereichen von Einmündungen wenigstens einer quer verlaufenden Rille in die Umfangsrille positioniert sind.

Durch diese Ausbildung wird ermöglicht, dass im Bereich des bei Off-Road-Reifen gerade für Eindringen von Steinen besonders kritischen Einmündungsbereichs von Querrillen in die Umfangsrillen die Steinabweiser wirkungsvoll positioniert sind. Dabei sind die Steinabweiser mit ihren schmal ausgebildeten Stegen, die lediglich längs der Erstreckung der Umfangsrille ausgerichtet sind, auch besonders strömungsgünstig ausgebildet. In dem besonders für das Eindringen von Steinen kritischen Bereich der Einmündung von Querrillen in die Umfangsrille, in dem die Strömung des Wassers ohnehin bereits aufgrund des dort ausgebildeten großen Negativvolumens am wenigsten durch die Umfangsrille und ihren Verlauf selbst beeinträchtigt ist, ermöglicht der dort positionierte Steinauswerfer durch seine strömungsoptimierte, strömungsleitende Form sogar einen die Strömung in Richtung der Umfangsrille leitenden, positiven Einfluss. In den zwischen den Positionen von in Umfangsrichtung hintereinander einmündenden Querrillen, in welchen einerseits das Eindringen von Steinen besonders unkritisch, aber andererseits der strömungsbehindernde Einfluss des Verlaufs der Umfangsrille besonders groß ist, sind keine die Strömung in irgendeiner Weise beeinträchtigenden zusätzlichen Steinauswerfer ausgebildet. Auf diese Weise kann somit auch bei Off-Road-Reifen ein besonders wirksamer Schutz gegen Eindringen von Steinen einfach umgesetzt werden, ohne dabei den Abfluss des Wassers aus dem Profil und somit die Aquaplaning-Tauglichkeit des Reifens merklich zu beeinträchtigen. Darüber hinaus ermöglicht diese Position auch bei der Ausformung des Reifens im Rahmen der Herstellung eine zusätzliche Versteifung gerade des Einmündungsbereichs der Querrille in die Umfangsrille durch die Aufhäufung des zusätzliches Kautschukmaterial zur Ausformung des Steinauswerfers im Rillengrund, wodurch mögliche Deformationen des Gürtels im Rahmen der Ausformung im Bereich der Einmündung wirksam entgegengewirkt werden kann. Im fertigen Reifen bewirkt dies eine zusätzliche Geräuschreduktion des Reifens.

Besonders vorteilhaft ist die Ausbildung eines Fahrzeugreifens gemäß den Merkmalen von Anspruch 2, wobei b mit 1mm ≤ b ≤ 3mm ausgebildet ist. Hierdurch kann in einfacher Weise eine ausreichende Stabilität des Steinauswerfers bei geringem Volumen und guter Umströmbarkeit umgesetzt werden.

Besonders vorteilhaft ist die Ausbildung eines Fahrzeugreifens gemäß den Merkmalen von Anspruch 3, wobei die beiden stegförmigen Körper jeweils im Wesentlichen mittig in der Umfangsrille angeordnet sind. Hierdurch kann die Steinauswurffunktion in einfacher Weise optimiert umgesetzt werden.

Besonders vorteilhaft ist die Ausbildung eines Fahrzeugreifens gemäß den Merkmalen von Anspruch 4, wobei der zentrale Körper mit einer in radialer Richtung R gemessenen Höhe H_{Z} und die beiden Stege mit einer maximalen Höhe H_{S} ausgebildet sind mit H_{Z} > H_{S} - insbesondere mit H_{S} ≤ (H_{Z} -0,5mm) -, und wobei der Steg in der Schnittkontur mit dem zentralen Köper mit der maximalen Höhe H_{S} ausgebildet ist. Im zentralen Bereich des großen Negativvolumens im Bereich der Einmündung der Querrille in die Umfangsrille kann hierdurch der Zentralkörper besonders wirksam dem Eindringen von Steinen entgegenwirken und den Steinauswurf bewirken ohne die Strömung merklich zu beeinträchtigen. Hierdurch kann somit der Steinauswurf weiter optimiert werden.

Besonders vorteilhaft ist die Ausbildung eines Fahrzeugreifens gemäß den Merkmalen von Anspruch 5, wobei der zentrale Körper mit einer Höhe H_{Z} mit 2mm ≤ H_{Z} ≤ (0,25 P_{T}) ausgebildet ist, wobei P_{T} die maximale Profiltiefe in der Umfangsrille ist. Dies ermöglicht in einfacher Weise die Umsetzung einer besonders wirksamen Steinauswurffunktion bei guten Aquaplaningeingenschaften.

Besonders vorteilhaft ist die Ausbildung eines Fahrzeugreifens gemäß den Merkmalen von Anspruch 6, wobei die beiden Stege jeweils ausgehend vom zentralen Körper längs ihrer Haupterstreckungsrichtung gemessenen maximalen Erstreckungslänge L mit 3mm≤L≤10mm ausgebildet sind. Dies ermöglicht eine einfache, variable Integration der Steinauswerfer im Bereich der Einmündungen in die Umfangsrille bei wirksamer Funktion.

Die Erfindung wird im Folgenden an Hand der in den Figuren 1 bis 4 dargestellten Ausführungsbeispiele näher erläutert. Hierin zeigen
- Fig.1: einen Umfangsabschnitt eines Laufstreifenprofils eines Off-Road-Fahrzeugluftreifens eines Personenkraftwagens (Pkw) in Draufsicht,
- Fig.2: einen Ausschnitt des Laufstreifenprofils von Fig.1 in Schnittdarstellung gemäß Schnitt II-II von Fig.1,
- Fig.3: einen Ausschnitt des Laufstreifenprofils von Fig.1 in Schnittdarstellung gemäß Schnitt III-III von Fig.1 und
- Fig.4: einen Ausschnitt des Laufstreifenprofils von Fig.1 in Schnittdarstellung gemäß Schnitt IV-IV von Fig.1.

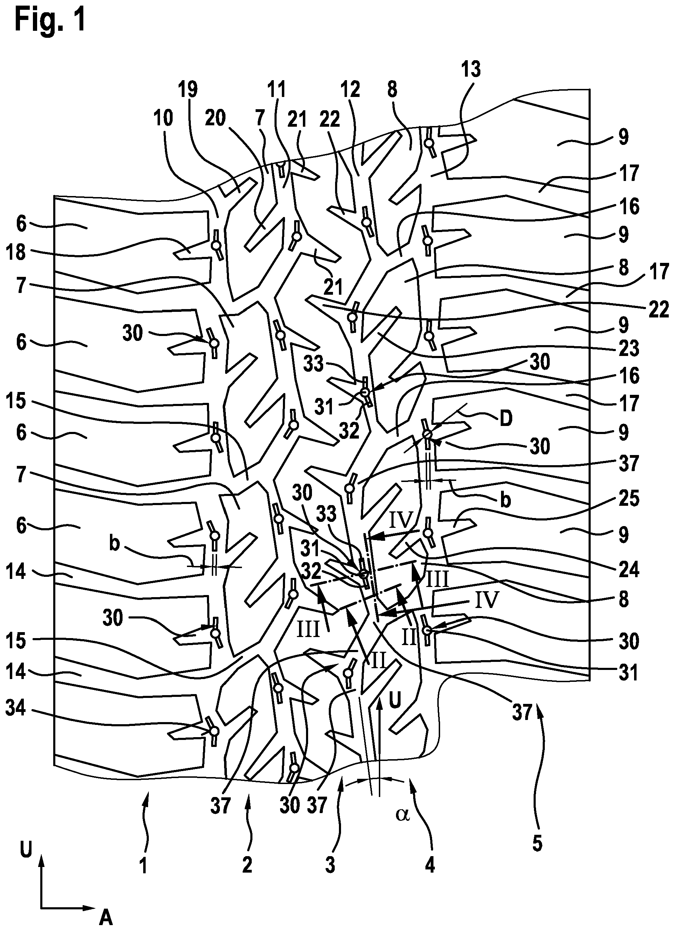

Die Figuren 1 bis 4 zeigen ein Laufstreifenprofil eines Off-Road-Fahrzeugluftreifens eines PKW (Personenkraftwagens) mit fünf in axialer Richtung A nebeneinander angeordneten Profilbändern, welche jeweils in bekannter Weise durch Umfangsrillen in axialer Richtung A des Fahrzeugluftreifens voneinander getrennt sind. Die beiden in den Reifenschultern ausgebildeten Profilbänder sind dabei als Profilblockreihen 1 und 5 bekannter Art ausgebildet. In axialer Richtung A zwischen den beiden Profilblockreihen 1 und 5 sind zwei Profilbänder ebenfalls als Blockreihen 2 und 4 und ein zentrales, zwischen den beiden Blockreihen 2 und 4 ausgebildetes Profilband als Umfangsrippe 3 bekannter Art ausgebildet. Die Profilblockreihe 1 ist von der zu ihr axial benachbarten Profilblockreihe 2 in axialer Richtung A durch eine Umfangsrille 10 axial beabstandet ausgebildet. Die Profilblockreihe 2 ist von der zu ihr axial benachbarten Umfangsrippe 3 in axialer Richtung A durch eine Umfangsrille 11 beabstandet ausgebildet. Die Umfangsrippe 3 ist von der zu ihr axial benachbarten Profilblockreihe 4 durch eine Umfangsrille 12 in axialer Richtung A beabstandet ausgebildet. Die Profilblockreihe 4 ist von der Profilblockreihe 5 durch eine Umfangsrille 13 axial beabstandet ausgebildet.

Die Profilblockreihe 1 ist in bekannter Weise aus in Umfangsrichtung U des Fahrzeugluftreifens hintereinander angeordneten und jeweils durch Querrillen 14 in Umfangsrichtung U voneinander beabstandeten Profilblockelementen 6 bekannter Art ausgebildet. Die Profilblockreihe 5 ist in bekannter Weise aus in Umfangsrichtung U des Fahrzeugluftreifens hintereinander angeordneten und jeweils durch Querrillen 17 in Umfangsrichtung U voneinander beabstandeten Profilblockelementen 9 bekannter Art ausgebildet. Die Querrillen 14 erstrecken sich in axialer Richtung A durch die Profilblockreihe 1 hindurch und münden in die Umfangsrille 10. Die Querrillen 17 erstrecken sich in axialer Richtung A durch die Profilblockreihe 5 hin durch und münden in die Umfangsrille 13.

Die Profilblockreihe 2 ist in bekannter Weise aus über den Umfang des Fahrzeugluftreifens in Umfangsrichtung U hintereinander angeordneten und durch Querrillen 15 voneinander beabstandeten Profilblockelementen 7 ausgebildet. Die Profilblockreihe 4 ist in bekannter Weise aus über den Umfang des Fahrzeugluftreifens in Umfangsrichtung U hintereinander angeordneten und jeweils durch Querrillen 16 voneinander beabstandeten Profilblockelementen 8 ausgebildet. Die Querrillen 15 erstrecken sich in axialer Richtung A durch die gesamte Profilblockreihe 2 hindurch und münden zur einen axialen Erstreckungsrichtung hin in die Umfangsrille 10 und zur anderen axialen Erstreckungsrichtung in die Umfangsrille 11. Die Querrillen 16 erstrecken sich in axialer Richtung A durch die gesamte Profilblockreihe 4 hindurch und münden zur einen axialen Erstreckungsrichtung in die Umfangsrille 12 und zur anderen axialen Erstreckungsrichtung hin in die Umfangsrille 13.

In den Profilblockelementen 6 ist jeweils eine zusätzliche Querrille 18 ausgebildet, die sich ausgehend von der Umfangsrille 10 in der von der Umfangsrille 10 wegweisenden axialen Erstreckungsrichtung bis in die Profilblockelemente 6 hinein erstreckt und dort endet. In den Profilblockelementen 9 ist jeweils eine zusätzliche Querrille 25 ausgebildet, die sich ausgehend von der Umfangsrille 13 in der von der Umfangsrille 13 wegweisenden axialen Erstreckungsrichtung bis in die Profilblockelemente 9 hinein erstreckt und dort endet.

In den Profilblockelementen 7 ist jeweils ein zusätzliche Querrillen 19 ausgebildet, welche sich ausgehend von der Umfangsrille 10 in axialer Richtung in Richtung zur zentralen Umfangsrippe 3 hin bis in die Profilblockelemente 7 hinein erstreckt und dort mit Abstand zur Umfangsrille 11 endet. Darüber hinaus ist in jedem Profilblockelement 7 in Umfangsrichtung versetzt zur Querrille 19 jeweils eine weitere Querrille 20 ausgebildet, welche sich ausgehend von der Umfangsrille 11 in axialer Erstreckungsrichtung A in Richtung zur Profilblockreihe 1 hin bis in das Profilblockelement 7 hinein erstreckt und dort mit Abstand zur Umfangsrille 10 endet. Ebenso ist in jedem Profilblockelementen 8 jeweils ein zusätzliche Querrille 24 ausgebildet, welche sich ausgehend von der Umfangsrille 13 in axialer Richtung in Richtung zur zentralen Umfangsrippe 3 hin bis in die Profilblockelemente 8 hinein erstreckt und dort mit Abstand zur Umfangsrille 12 endet. Darüber hinaus ist in jedem Profilblockelement 8 in Umfangsrichtung versetzt zur Querrille 24 jeweils eine weitere Querrille 23 ausgebildet, welche sich ausgehend von der Umfangsrille 12 in axialer Erstreckungsrichtung A in Richtung zur Profilblockreihe 5 hin bis in das Profilblockelement 8 hinein erstreckt und dort mit Abstand zur Umfangsrille 13 endet.

Ebenso sind in der Umfangsrippe 3 über den Umfang des Reifens verteilt zusätzliche Querrillen 22 ausgebildet, welche sich ausgehend von der Umfangsrille 12 in axialer Erstreckungsrichtung A zur Profilblockreihe 1 hin bis in Umfangsrippe 3 hinein erstrecken und dort mit Abstand zur Umfangsrille 11 enden. Ebenso ist jeweils zwischen zwei in Umfangsrichtung U hintereinander angeordneten Querrillen 22 eine zusätzliche Querrille 21 in der Umfangsrippe 3 ausgebildet, welche sich ausgehend von der Umfangsrille 11 in axialer Erstreckungsrichtung A zur Profilblockreihe 5 hin bis in die Umfangsrippe 3 hinein erstrecken und dort mit Abstand zur Umfangsrille 12 enden.

Die Querrillen 14 und 17 sind jeweils längs ihrer axialen Erstreckung mit wenigstens einer Knickstelle in ihrem Erstreckungsverlauf ausgebildet. Die Querrillen 15 und 16 sind jeweils als Schrägrillen unter Einschluss eines Winkels zwischen 0° und 60° zur axialen Richtung A schräg verlaufend ausgebildet. Die Querrillen 20 und 19 sind mit gleich gerichteter axialen Neigung wie die Querrillen 15 ausgebildet. Die Querrillen 23 und 24 sind mit gleich gerichteter axialen Neigungsrichtung wie die Querrillen 17 ausgerichtet. Die Querrillen 22 und 21 sind ebenfalls schräg verlaufend mit einer gleichen axialen Neigungsrichtung ausgerichtet.

Die Umfangsrillen 10, 11, 12 und 13 sind jeweils längs ihrer Erstreckung in Umfangsrichtung U aus einer Vielzahl von geradlinig erstreckten kürzeren hintereinander angeordneten Erstreckungsabschnitten ausgebildet, die jeweils durch eine Knickstelle 37 miteinander verbunden sind, so dass die Umfangsrillen 10, 11, 12, 13 längs ihrer Erstreckung in Umfangsrichtung U mit einem auch längs der Erstreckung der zu ihnen benachbarten Profilblockelemente 7 bzw. 8 jeweils mit einem mehrfach wechselndem Neigungswinkels α zur Umfangsrichtung U ausgerichtet ausgebildet sind. Am Beispiel der Umfangsrille 12 sind in Fig.1 nur einige der dort ausgebildeten Knickstellen 37 mit dem Bezugszeichen 37 gekennzeichnet. Dabei ist zu erkennen, dass längs der Erstreckung der Umfangsrille 12 - ebenso wie die Umfangsrillen 10,11 und 13 - in Umfangsrichtung U der Neigungswinkel α nicht nur mehrfach hinsichtlich seiner Größe - mit zum Teil sehr unterschiedlicher Größe -, sondern auch in seiner Neigungsrichtung geändert ist. Durch den vielfach geknickten Verlauf der sie begrenzenden Umfangsrillen 10 und 11 bzw. 12 und 13 und der Querrillen 15, 19 und 20 bzw. 16, 23 und 24 sind die Profilblockelemente 7 und 8 grobstollig ausgebildete Profilblockelemente mit S-förmigem Verlauf mit einer Vielzahl von Kanten und Ecken. Ebenso ist die Umfangsrippe 3 durch den Verlauf der Umfangsrillen 11 und 12 sowie durch die Querrillen 21 und 22 als grob strukturierte, zackenförmige stark gewundene Umfangsrippe mit einer Vielzahl von Kanten und Ecken ausgebildet.

Die Umfangsrillen 10, 11, 12 und 13 sind in bekannter Weise in radialer Richtung R nach innen hin jeweils durch einen Rillengrund 26 und beiderseits des Rillengrundes 26 jeweils durch eine Rillenwand 27 bzw. 28 begrenzt. Die Rillenwand 27 ist jeweils die in axialer Richtung A zur Profilblockreihe 1 hin begrenzende Rillenwand und die Rillenwand 28 die in axialer Richtung A zur Profilblockreihe 5 hin begrenzende Rillenwand. Ebenso sind auch die Querrillen 14, 15, 16, 17, 19, 20, 21, 22, 23 und 24 des Profils jeweils in radialer Richtung R nach innen hin durch einen Rillengrund und beiderseits des Rillengrundes durch eine Rillenwand begrenzt.

Die Profilblockelemente 6, 7, 8, 9 und die Umfangsrippe 3 sind in radialer Richtung R nach außen hin jeweils durch eine die Bodenkontaktoberfläche des Reifens bildende radial äußere Oberfläche 29 begrenzt.

In den Umfangsrillen 10, 11, 12 und 13 sind über den Umfang des Reifens verteilt im Rillengrund 26 jeweils hinter einander radial erhabene Steinauswerfer 30 ausgebildet. Die Steinauswerfer 30 sind jeweils aus einem Zentralkörper 31 und aus zwei Stegen 32 und 33 gebildet. Jeder Steinauswerfer 30 ist dabei mit seinem Zentralkörper 31 an einer Umfangsposition der jeweiligen Umfangsrille positioniert, in der in die jeweilige Umfangsrille eine der im durch die Umfangsrille begrenzten Profilband endenden Querrillen in die Umfangsrille mündet.

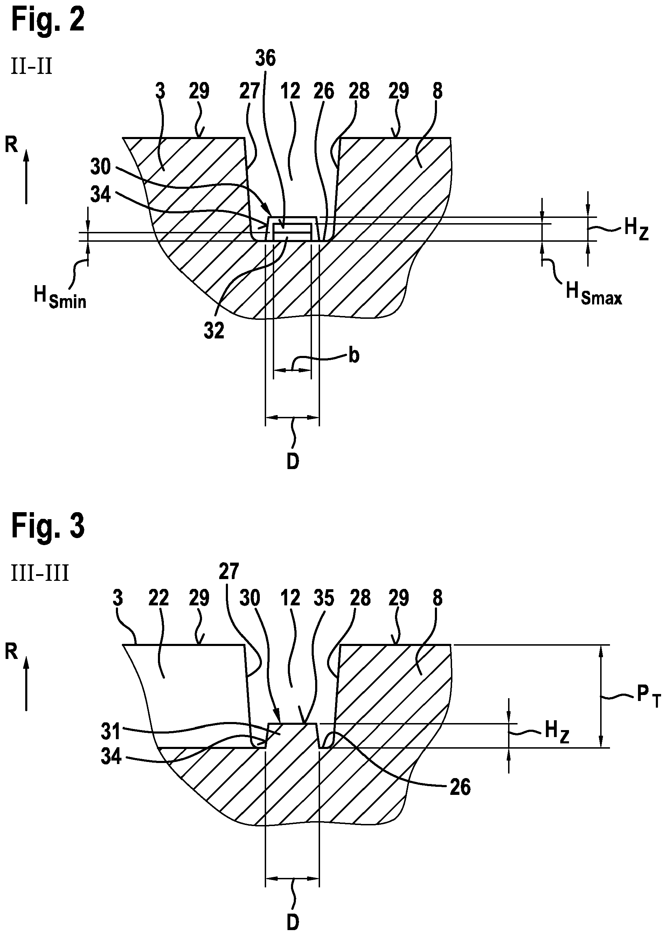

Beispielhaft ist dies im Folgenden anhand der Steinauswerfer 30 der Umfangsrille 12 näher erläutert und in den Figuren 2 bis 4 dargestellt. In der Umfangsrille 12 sind die Steinauswerfer 30 jeweils in einer Umfangsposition der Umfangsrille 12 positioniert, in die eine Querrille 22 der die Umfangsrille 12 begrenzenden Umfangsrippe 3 in die Umfangsrille 12 mündet. Wie in den Figuren 1 bis 4 dargestellt ist, ist der Zentralkörper 31 ein zylindrischer oder kegelstumpfförmig ausgebildeter Zentralkörper 31, dessen Zylinderachse bzw. Kegelachse in radialer Richtung R des Reifens ausgerichtet ist und dessen Mantelfläche 34 einen maximale Durchmesser D aufweist. Wie in den Figuren 2 bis 4 zu erkennen ist, ist dort ein Beispiel eines kegelstumpfförmig ausgebildeten Zentralkörpers 31 dargestellt, bei dem der Kegelöffnungswinkel γ = 5° gewählt ist und bei dem die Kegelspitze in radialer Position außerhalb des Rillengrundes 26 angeordnet ist. In diesem Ausführungsbeispiel ist der maximale Durchmesser D des Zentralkörpers 31 im Rillengrund 26 ausgebildet. Der kegelstumpfförmige Zentralkörper 31 wird in einer Höhe Hz radial oberhalb des Rillengrundes 26 von einer ebenen Stirnfläche 35 begrenzt. Somit erstreckt sich der Zentralkörper 31 in radialer Richtung R bis in eine Höhe Hz oberhalb des Rillengrundes 26 und endet dort. Wie in Fig.1 dargestellt ist, ist dem Zentralkörper 31 in Umfangsrichtung U vorgeordnet ein Steg 32 und in Umfangsrichtung U dem Zentralkörper 31 nachgeordnet ein Steg 33 ausgebildet. Die Stege 32 und 33 erstrecken sich jeweils geradlinig mit einer längs ihrer gesamten Erstreckung jeweils senkrecht zu ihrer Erstreckungsrichtung gemessenen konstant ausgebildeten Breite b. Die Stege 32 und 33 erstrecken sich dabei mit einer zur Zylinderachse bzw. Kegelachse radialen Erstreckungsrichtung des Zentralkörpers 30 ausgehend von der Mantelfläche 34 des Zentralkörpers 31 über eine maximale Erstreckungslänge L mit 3mm≤L≤10mm strahlenförmig nach außen und enden dort.

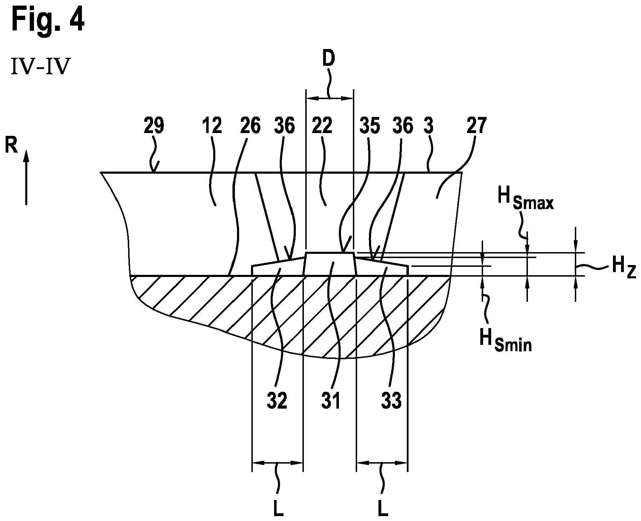

Wie in der Fig. 2 und in Fig. 4 zu erkennen ist, werden die Stege 32 und 33 in radialer Richtung R nach außen hin von einer ebenen Deckfläche 36 begrenzt. Die Stege 32 und 33 sind dabei in radialer Richtung R des Fahrzeugluftreifens mit einer vom Rillengrund 26 gemessenen maximalen Höhe in der Position ihrer Schnittfläche mit der Mantelfläche 34 des Zentralkörpers 31 ausgebildet. Die Höhe Hs nimmt ausgehend von dem Wert H_{Smax} ihrer maximalen Höhe in der Mantelfläche 34 längs der Erstreckung des jeweiligen Steges 32 und 33 über die Erstreckungslänge L des Steges 23 bzw.33 kontinuierlich ab und erreicht am vom Zentralkörper 31 wegweisende Erstreckungsende des Steges 23 bzw.33 ihren Minimalwert mit H_{Smin}. Dabei ist H_{Smax} < H_{Z} und H_{Smin} (≤ H_{Z} - 0,5mm) ausgebildet.

Die Höhe H_{Z} ist mit 2mm ≤ H_{Z} ≤ (0,25 P_{T}) ausgebildet, wobei P_{T} die in der Umfangsrille 12 gemessene zwischen radial äußerer Oberfläche 29 der die Umfangsrille 12 begrenzenden Umfangsrippe 3 und Profilblockelemente 8 einerseits und dem Rillengrund 26 der Umfangsrille 12 gemessenen Profiltiefe ist. Die Profiltiefe P_{T} ist dabei bei Off-Road-Reifen mit 8mm ≤ P_{T} ≤ 12mm ausgebildet.

Die Länge L ist im dargestellten Ausführungsbeispiel mit 5mm≤L≤6mm, beispielsweise mit L = 5mm gewählt ausgebildet.

Im dargestellten Ausführungsbeispiel ist H_{Z} = 4mm, H_{Smax} = 1,9mm und H_{Smin} = 0,5mm gewählt ausgebildet.

Die Stegbreite längs der Erstreckung der Stege 32 bzw.33 in deren Haupterstreckungsrichtung und in radialer Erstreckungsrichtung des Reifens konstant ausgebildete Stegbreite b ist mit (0,5 D) ≥ b ≥ 1mm gewählt ausgebildet, wobei b ≤ 3mm ausgebildet ist. Beispielsweise ist D = 4mm und b = 1,5mm ausgebildet.

Wie in Fig. 1 zu erkennen ist, ist dabei der in Umfangsrichtung U des Reifens dem Zentralkörper 31 vorgeordnete Steg 32 jeweils mit seiner Haupterstreckungsrichtung im Wesentlichen dem Erstreckungsverlauf der Umfangsrille 12 im Erstreckungsbereich des Steges 32 und der dem Zentralkörper 31 in Umfangsrichtung nachgeordnete Steg 33 dem Erstreckungsverlauf der Umfangsrille 12 im Erstreckungsbereich des Steges 33 angepasst ausgerichtet. Hierdurch ist dem teilweise mit stark geknicktem Verlauf der Umfangsrille 12 entsprechend auch der Erstreckungsverlauf des Steges 32 und der Erstreckungsverlauf des Steges 33 bei manchen Steinauswerfern 30 deutlich abweichend voneinander ausgebildet, wobei in der Position der Zylinderachse bzw. Kegelachse des Zentralkörpers 31 der Steinauswerfer 30 mit einem Knick ausgebildet ist.

Der Zentralkörper 31 eines Steinauswerfers 30 ist dabei in axialer Richtung A des Fahrzeugluftreifens im Wesentlichen mittig zur Umfangsrille 12 positioniert. Der Steinauswerfer 30 bildet mit seinem Knickverlauf und den schmalen Stegen 32 und 33 eine strömungsgünstige Leitfläche für die Strömung im Bereich des Rillengrundes.

Wie in Fig. 1 zu erkennen ist, sind in der Umfangsrille 12 die Steinauswerfer 30 jeweils in der Einmündungsposition der Querrillen 22 in die Umfangsrille 12 ausgebildet. In analoger Weise ist in der Umfangsrille 11 jeweils in der Umfangsposition der Einmündung einer Querrille 21 in die Umfangsrille 11 ein Steinauswerfer 30 positioniert. In analoger Weise ist in der Umfangsrille 10 jeweils in der Umfangsposition der Einmündung einer Querrille 18 in die Umfangsrille 10 ein Steinauswerfer 30 positioniert und in der Umfangsrille 13 jeweils in der Umfangsposition der Einmündung einer Querrille 25 in die Umfangsrille 13.

Auch wenn in den Figuren 2 bis 4 der Zentralkörper 31 als kegelstumpfförmiger Zentralkörper dargestellt ist, ist in anderer - nicht dargestellter - Ausführung, wie bereits oben beschrieben der Zentralkörper 31 als zylinderförmiger Zentralkörper 31 ausgebildet, wobei der maximale Durchmesser D dann dem Zylinderdurchmesser entspricht.

### Bezugszeichenliste

### (Teil der Beschreibung)

- 1: Blockreihe
- 2: Blockreihe
- 3: Umfangsrippe
- 4: Blockreihe
- 5: Blockreihe
- 6: Blockelement
- 7: Blockelement
- 8: Blockelement
- 9: Blockelement
- 10: Umfangsrille
- 11: Umfangsrille
- 12: Umfangsrille
- 13: Umfangsrille
- 14: Querrille
- 15: Querrille
- 16: Querrille
- 17: Querrille
- 18: Querrille
- 19: Querrille
- 20: Querrille
- 21: Querrille
- 22: Querrille
- 23: Querrille
- 24: Querrille
- 25: Querrille
- 26: Rillengrund
- 27: Rillenwand
- 28: Rillenwand
- 29: Radial äußere Oberfläche
- 30: Steinauswerfer
- 31: Zentralkörper
- 32: Steg
- 33: Steg
- 34: Mantelfläche
- 35: Stirnfläche
- 36: Deckfläche
- 37: Knickstelle

## Patentansprüche

1. Fahrzeugreifen mit einem Off-Road-Laufstreifenprofil mit radial erhabenen Profilelementen (6,7,3,8,9), die durch über den Umfang des Fahrzeugreifens erstreckte Umfangsrillen (10,11,12,13) getrennt sind und mit quer verlaufenden Rillen (18,19,20,21,22,23,2425), welche in Umfangsrillen (10,11,12,13) münden, wobei die Umfangsrillen (10,11,12,13) in radialer Richtung nach innen hin durch einen Rillengrund (26) und beiderseits des Rillengrundes (26) jeweils durch eine Rillenwand (27,28) begrenzt werden und längs ihrer Erstreckung über den Umfang des Reifens mit geänderter axialer Neigung ausgebildet sind, **wobei im Rillengrund (26) von wenigstens einer Umfangsrille (12) radial erhabene Steinabweiser (30) kontaktfrei zu den Rillenwänden (26,27) ausgebildet sind,** wobei **die radial** erhabenen **Steinabweiser (30)** jeweils aus einem zylindrischen oder kegelstumpfförmigen zentralen Körper (31) mit maximalem Durchmesser D, dessen Zylinder- bzw. Kegelachse im Wesentlichen in radialer Richtung ausgerichtet ist, ausgebildet sind, wobei zentrale Körper (31) jeweils ausschließlich in Umfangserstreckungsbereichen von Einmündungen wenigstens einer quer verlaufenden Rille (22) in die Umfangsrille (12) positioniert sind,
**dadurch gekennzeichnet,**
**dass** die radial erhabenen Steinabweiser (30) außerdem aus jeweils einem in Erstreckungsrichtung der Umfangsrille (12) dem zentralen Körper (31) vorgeordneten (32) und einem in Erstreckungsrichtung der Umfangsrille (12) dem zentralen Körper (31) nachgeordneten (33) stegförmigen Körper ausgebildet sind, wobei die beiden stegförmigen Körper (32,33) jeweils ausgehend von der Mantelfläche (34) des zentralen Körpers (31) parallel zur Erstreckungsrichtung der Umfangsrille (12) ausgerichtet vom zentralen Körper (31) strahlenförmig wegweisend erstreckt und mit einer maximalen Breite b mit (0,5 D) ≥ b ≥ 1mm ausgebildet sind.

2. Fahrzeugreifen gemäß den Merkmalen von Anspruch 1,
wobei b mit 1mm ≤ b ≤ 3mm ausgebildet ist.

3. Fahrzeugreifen gemäß den Merkmalen von Anspruch 1 oder 2,
wobei die beiden stegförmigen Körper (32,33) jeweils im Wesentlichen mittig in der Umfangsrille (12) angeordnet sind.

4. Fahrzeugreifen gemäß den Merkmalen von einem oder mehreren der vorangegangenen Ansprüche,
wobei der zentrale Körper (31) mit einer in radialer Richtung R gemessenen Höhe H_{Z} und die beiden Stege (32,33) mit einer maximalen Höhe H_{S} ausgebildet sind mit H_{Z} > H_{S} - insbesondere mit H_{S} ≤ (H_{Z} -0,5mm) -, und
wobei der Steg (32,33) in der Schnittkontur mit dem zentralen Köper (31) mit der maximalen Höhe H_{S} ausgebildet ist.

5. Fahrzeugreifen gemäß den Merkmalen von einem oder mehreren der vorangegangenen Ansprüche,
wobei der zentrale Körper (31) mit einer Höhe H_{Z} mit 2mm ≤ H_{Z} ≤ (0,25 P_{T}) ausgebildet ist, wobei P_{T} die maximale Profiltiefe in der Umfangsrille (12) ist.

6. Fahrzeugreifen gemäß den Merkmalen von einem oder mehreren der vorangegangenen Ansprüche,
wobei die beiden Stege (32,33) jeweils ausgehend vom zentralen Körper (31) längs ihrer Haupterstreckungsrichtung gemessenen maximalen Erstreckungslänge L mit 3mm≤L≤10mm ausgebildet sind.

## Claims

1. Vehicle tire having an off-road tread profile with radially elevated profile elements (6, 7, 3, 8, 9), which are separated by circumferential channels (10, 11, 12, 13) extending over the circumference of the vehicle tire, and with transversely running channels (18, 19, 20, 21, 22, 23, 2425) which open into circumferential channels (10, 11, 12, 13), wherein the circumferential channels (10, 11, 12, 13) are delimited inward in a radial direction by a channel base (26) and to both sides of the channel base (26) in each case by a channel wall (27, 28), and are formed, along their extent over the circumference of the tire, with a varied axial inclination,
wherein
in the channel base (26) of at least one circumferential channel (12), radially elevated stone deflectors (30) are formed so as to be free from contact with the channel walls (26, 27),
wherein the radially elevated stone deflectors (30) are formed from in each case one cylindrical or frustoconical central body (31) with maximum diameter D, the cylinder or cone axis of which is oriented substantially in the radial direction,
wherein central bodies (31) are positioned in each case exclusively in circumferential extent regions of opening-in points of at least one transversely running channel (22) into the circumferential channel (12), **characterized**
**in that** the radially elevated stone deflectors (30) are furthermore formed from in each case one web-like body situated in front (32) of the central body (31) in the extent direction of the circumferential channel (12) and one web-like body situated behind (33) the central body (31) in the extent direction of the circumferential channel (12),
wherein the two web-like bodies (32, 33) are each formed so as to extend from the shell surface (34) of the central body (31) so as to be oriented parallel to the extent direction of the circumferential channel (12) and point radially away from the central body (31) and with a maximum width b, where (0.5 D) ≥ b ≥ 1 mm.

2. Vehicle tire as per the features of Claim 1, wherein b is configured such that 1 mm ≤ b ≤ 3 mm.

3. Vehicle tire as per the features of Claim 1 or 2, wherein the two web-like bodies (32, 33) are arranged in each case substantially centrally in the circumferential channel (12).

4. Vehicle tire as per the features of one or more of the preceding claims,
wherein the central body (31) is formed with a height H_{Z} measured in the radial direction R and the two webs (32, 33) are formed with a maximum height H_{S}, where H_{Z} > H_{S}, in particular H_{S} ≤ (H_{Z} -0.5 mm), and wherein the web (32, 33) is formed with the maximum height H_{S} in the intersection contour with the central body (31).

5. Vehicle tire as per the features of one or more of the preceding claims,
wherein the central body (31) is formed with a height H_{Z}, where 2 mm ≤ H_{Z} ≤ (0.25 P_{T}), where P_{T} is the maximum profile depth in the circumferential channel (12).

6. Vehicle tire as per the features of one or more of the preceding claims,
wherein the two webs (32, 33) are each formed maximum extent length L measured along their main extent direction proceeding from the central body (31), where 3 mm ≤ L ≤ 10 mm.

## Revendications

1. Pneumatique de véhicule comprenant un profil de bande de roulement tout-terrain comprenant des éléments profilés rehaussés radialement (6, 7, 3, 8, 9) qui sont séparés par des rainures périphériques (10, 11, 12, 13) s'étendant sur la périphérie du pneumatique de véhicule et comprenant des rainures (18, 19, 20, 21, 22, 23, 2425) s'étendant transversalement, qui débouchent dans les rainures périphériques (10, 11, 12, 13), les rainures périphériques (10, 11, 12, 13) étant limitées dans la direction radiale vers l'intérieur par un fond de rainure (26) et des deux côtés du fond de rainure (26) à chaque fois par une paroi de rainure (27, 28) et étant réalisées le long de leur étendue sur la périphérie du pneu avec une inclinaison axiale variée,
des déflecteurs de gravillons (30) rehaussés radialement étant réalisés sans contact avec les parois de rainure (26, 27) dans le fond de rainure (26) d'au moins une rainure périphérique (12),
les déflecteurs de gravillons (30) rehaussés radialement étant réalisés à chaque fois à partir d'un corps cylindrique ou tronconique central (31) de diamètre maximal D, dont l'axe de cylindre ou de cône est orienté essentiellement dans la direction radiale, des corps centraux (31) étant à chaque fois positionnés dans la rainure périphérique (12) exclusivement dans des régions d'étendue périphérique d'embouchures d'au moins une rainure (22) s'étendant transversalement, **caractérisé en ce que**
les déflecteurs de gravillons (30) rehaussés radialement sont en outre réalisés à chaque fois à partir d'un corps en forme de nervure placé en amont (32) du corps central (31) dans la direction d'étendue de la rainure périphérique (12), et d'un corps en forme de nervure placé en aval (33) du corps central (31) dans la direction d'étendue de la rainure périphérique (12),
les deux corps en forme de nervure (32, 33) s'étendant à chaque fois à partir de la surface d'enveloppe (34) du corps central (31) de manière orientée parallèlement à la direction d'étendue de la rainure périphérique (12) en s'écartant en forme de rayon du corps central (31) et étant réalisés avec une largeur maximale b de (0,5 D) ≥ b ≥ 1 mm.

2. Pneumatique de véhicule selon les caractéristiques de la revendication 1,
dans lequel b est réalisé avec 1 mm ≤ b ≤ 3 mm.

3. Pneumatique de véhicule selon les caractéristiques de la revendication 1 ou 2,
dans lequel les deux corps en forme de nervure (32, 33) sont chacun disposés essentiellement centralement dans la rainure périphérique (12).

4. Pneumatique de véhicule selon les caractéristiques d'une ou plusieurs des revendications précédentes, dans lequel le corps central (31) est réalisé avec une hauteur H_{Z} mesurée dans la direction radiale R et les deux nervures (32, 33) sont réalisées avec une hauteur maximale H_{S} avec H_{Z} > H_{S}, en particulier avec H_{S} ≤ (H_{Z} - 0,5 mm), et
dans lequel le contour en coupe de la nervure (32, 33) avec le corps central (31) est réalisé avec la hauteur maximale H_{S}.

5. Pneumatique de véhicule selon les caractéristiques d'une ou plusieurs des revendications précédentes, dans lequel le corps central (31) est réalisé avec une hauteur H_{Z} telle que 2 mm ≤ H_{Z} ≤ (0,25 P_{T}), P_{T} étant la profondeur de profilé maximale dans la rainure périphérique (12).

6. Pneumatique de véhicule selon les caractéristiques d'une ou plusieurs des revendications précédentes, dans lequel les deux nervures (32, 33) sont à chaque fois réalisées à partir du corps central (31) longueur d'étendue maximale L mesurée le long de sa direction d'étendue principale avec 3 mm ≤ L ≤ 10 mm.
